# DEMANDE DE BREVET EUROPEEN

(11) **EP 1 707 441 A1**
(43) Date de publication de la demande: **04.10.2006**
(21) Numéro de dépôt: 05447149.5
(22) Date de dépôt: 24.06.2005
(51) Int. Cl.: B60R 15/00

(54) **Bouchon universel de remplissage pour réservoir d'eau propre**

(30) Priorité: 24.06.2004 BE 200400308
(71) Demandeur: Douchy, Paul, 7160 Chapelle-lez-Herlaimont (BE)
(72) Inventeur: Douchy, Paul, 7160 Chapelle-lez-Herlaimont (BE)

(57) **Abrégé**

Bouchon universel de remplissage rapide, s'adaptant sur toutes les coupelles pour réservoirs d'eau propre permettant un remplissage aisé et sans aide.

Percé en son centre, il est doté d'un raccord rapide de tuyauterie souple sur la partie extérieure et d'un tuyau souple de dix centimètres allant vers le réservoir.

Une fois le bouchon vissé sur la coupelle, on insère le tuyau d'arrivée d'eau sur le raccord rapide d'un côté et sur l'alimentation d'eau de ville de l'autre côté.

Système permettant un remplissage en toute autonomie sans aide supplémentaire.

## Description

Bouchon universel de remplissage rapide, s'adaptant sur toutes les coupelles pour réservoirs d'eau propre des camping-cars, motor-homes, bateaux, etc.

Le bouchon (1) vient se visser sur la coupelle pendant la durée de remplissage du réservoir, en lieu et place du bouchon de fermeture, que celui-ci soit à fermeture simple ou à clé.

Il permet de remplir le réservoir de manière totalement autonome, ne nécessitant aucune présence durant cette opération.

Le bouchon est doté, sur la partie extérieure et en son centre, d'un raccord rapide (2) permettant d'accoupler à ce dernier une canalisation d'eau souple, généralement un tuyau d'arrosage, muni soit d'un raccord de robinet soit d'un coupleur mâle/mâle ou de tout autre système de fixation compatible..

A l'opposé, et du côté intérieur, se trouve fixé un flexible (3) d'une dizaine de centimètres.
La longueur de ce flexible peut varier suivant les besoins.

Pour le remplissage du réservoir d'eau propre, on fixe le bouchon (1) sur la coupelle.
On branche ensuite l'une des extrémités du tuyau souple d'arrivée d'eau que l'on vient insérer sur le raccord rapide.
L'autre extrémité du tuyau souple de remplissage vient se brancher sur le robinet d'arrivée d'eau.

Une fois le robinet d'eau ouvert, le remplissage du réservoir se fait sans aucune aide supplémentaire et permet durant la durée de remplissage de vaquer à d'autres occupations.

Lors d'un trop plein, le système de sécurité du réservoir d'eau propre du camping-car, du bateau, de la caravane, etc. déverse l'excédent d'eau.

Dans le cas où le réservoir d'eau propre ne comporte pas de système de sécurité, une ouverture est pratiquée dans le bouchon, suivant une marque de pré-découpe (4).
L'excédent d'eau, lors d'un trop-plein, peut ainsi s'écouler librement à l'extérieur du réservoir évitant à ce dernier d'être sous pression.

P.S. : Le raccord rapide peut être décentré par rapport au centre du bouchon.

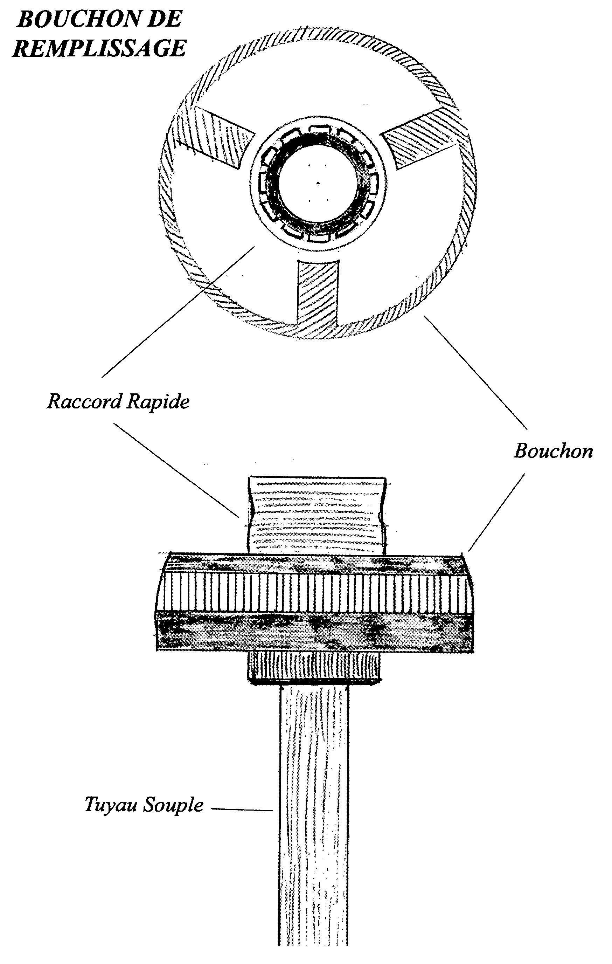

## Revendications

1. La présente invention concerne le domaine du remplissage des réservoirs d'eau propre et plus précisément les réservoirs de Motor-Home, de Camping-Cars, de Bateaux, de Caravanes et de tout type de véhicule utilisant des réservoirs d'eau propre destinés à être utilisés à des fins de consommation courante, que les eaux soient potables ou non.

2. La présente invention apporte un confort de vie à l'utilisateur dans le sens où le robinet d'arrivée d'eau fixe se trouve éloigné du réservoir à remplir et permet ainsi à une personne seule, la manoeuvre de remplissage du réservoir.

3. De plus, une fois le robinet principal d'arrivée d'eau actionné, ce système laisse l'opportunité à la personne de vaquer à d'autres occupations et permet ainsi un gain de temps précieux dans le sens où il n'est plus nécessaire de rester de faction avec le tuyau flexible d'arrivée d'eau en main.

4. L'utilisateur fixe le bouchon de remplissage sur la coupelle du réservoir et après avoir retiré le bouchon de fermeture, ce dernier étant généralement muni d'une clé.
Une fois cette opération effectuée, il vient insérer sur le bouchon de remplissage un tuyau flexible, communément de type arrosage, lui-même doté d'un raccord rapide.
La jonction se fait par l'entremise d'un connecteur mâle/mâle, ce dernier reliant les deux éléments, le tuyau d'arrivée d'eau et le bouchon de remplissage.
L'utilisateur peut ensuite actionner le robinet d'arrivée d'eau sans la nécessité d'être présent à côté du réservoir.

5. Cette invention évite les allées et venues inutiles entre le robinet d'arrivée d'eau et le réservoir d'eau propre.

6. Cette invention va également dans le sens de l'écologie grâce à une économie d'eau, amenant à moins de gaspillage de liquide souvent involontaire provoqué par des tuyaux simplement posés dans l'embouchure du réservoir et qui pour la plupart sont souvent projetés brutalement hors du réservoir par une trop forte poussée de l'installation d'arrivée des eaux ou lorsque le remplissage arrive à son terme.

7. Le remplacement du connecteur mâle/mâle, reliant le tuyau d'arrivée et le bouchon de remplissage, par un robinet d'arrêt volant que l'on trouve dans le commerce, apporte un confort accru d'utilisation, dans le sens où l'on peut couper l'arrivée d'eau au niveau du réservoir, avant de fermer le robinet fixe se trouvant quelquefois loin du réservoir, ce qui évite un gaspillage de liquide.

8. La présente invention, après recherche, n'a aucune équivalence sur le marché des bouchons de réservoir d'eau propre et permet de considérer une innovation certaine dans le domaine du remplissage des réservoirs d'eau propre destinés aux Motor-Homes, Camping-Cars, Bateaux, Caravanes et tout autre véhicule de quelque nature que ce soit utilisant un réservoir d'eau propre.
